# EUROPÄISCHE PATENTANMELDUNG

(11) **EP 4 752 039 A1**
(43) Veröffentlichungstag der Anmeldung: **03.06.2026**
(21) Anmeldenummer: 25213488.7
(22) Anmeldetag: 04.11.2025
(51) Int. Cl.: B62D 11/00, B62D 11/04, B62D 51/00

(54) **MEHRSPURIGE SELBSTFAHRENDE ARBEITSMASCHINE**

(30) Priorität: 29.11.2024 CH 13042024
(71) Anmelder: Aebi & Co. AG Maschinenfabrik, 3400 Burgdorf (CH)
(72) Erfinder: Bigler, Patrik, 3400 Burgdorf (CH); Bärtschi, Thomas, 3400 Burgdorf (CH)
(74) Vertreter: Grättinger Möhring von Poschinger Patentanwälte Partnerschaft mbB

(57) **Zusammenfassung**

Die vorliegende Erfindung betrifft eine mehrspurige selbstfahrende Arbeitsmaschine (1.1) umfassend ein Chassis (3), ein das Chassis (3) abstützendes Fahrwerk (4) mit zwei Rädern (51, 5r), einen hydrostatischen Fahrantrieb (6) mit zwei den beiden Rädern (51, 5r) zugeordneten Hydromotoren (121, 12r) und zwei diese speisende Hydraulikpumpen (131, 13r), die jeweils dazu geeignet sind, Hydraulikflüssigkeit zu einem der beiden Hydromotoren (121, 12r) zu fördern und jeweils ein Steuerorgan (141, 14r) aufweisen und durch Betätigen des Steuerorgans (141, 14r) der Fördervolumenstrom der jeweiligen Hydraulikpumpe (131, 13r) steuerbar ist. Die Arbeitsmaschine (1.1) umfasst ferner eine Lenkvorrichtung (7) und einen linear verschiebbar geführten Steuerschlitten (8.1), wobei ein Verdrehen der Lenkvorrichtung (7) in einem linearen Verschieben des Steuerschlittens (8.1) resultiert. Die Arbeitsmaschine umfasst zudem eine drehbar auf dem Steuerschlitten (8.1) gelagerte Steuerwippe (9.1), einen Fahraktuator (2.1), durch den die Steuerwippe (9.1) verdrehbar ist, zwei Steuerkoppelglieder (111, 11r), die jeweils eines der Steuerorgane (141, 14r) mit der Steuerwippe (9.1) mechanisch koppeln. Ein Verdrehen der Steuerwippe (9.1) mittels des Fahraktuators (2.1) resultiert in einem gleichzeitigen Betätigen beider Steuerorgane (141, 14r), ein lineares Verschieben des Steuerschlittens (8.1) resultiert in einem gleichzeitigen Betätigen beider Steuerorgane (141, 14r).

## Beschreibung

Die vorliegende Erfindung betrifft eine mehrspurige selbstfahrende Arbeitsmaschine, insbesondere in Form eines handgeführten Einachstraktors, umfassend ein Chassis (Basisstruktur), ein das Chassis abstützendes Fahrwerk mit zwei angetriebenen Rädern oder Gleisketten (Raupenketten), einen hydrostatischen Fahrantrieb mit zwei den beiden angetriebenen Rädern bzw. Gleisketten zugeordneten Hydromotoren und zwei diese speisende Hydraulikpumpen und eine gegenüber dem Chassis drehbar gelagerte Lenkvorrichtung. Die Hydraulikpumpen sind dabei jeweils dazu geeignet, Hydraulikflüssigkeit zu einem der beiden Hydromotoren zu fördern und weisen jeweils ein Steuerorgan auf, wobei durch Betätigen des Steuerorgans der Fördervolumenstrom (und die Förderrichtung) der jeweiligen Hydraulikpumpe steuerbar ist.

Derartige Arbeitsmaschinen sind in der Landwirtschaft sowie der Kommunaltechnik verbreitet im Einsatz und zählen zum Produktprogramm der Anmelderin. Insbesondere als handgeführte Einachstraktoren (handgeführte einachsige Geräteträger) werden solche Arbeitsmaschinen mit z.B. einem Mähwerk bestückt und im Rahmen der landwirtschaftlichen Bewirtschaftung von Hanglagen verwendet.

Um eine derartige Arbeitsmaschine zu beschleunigen oder zu verzögern, betätigt eine der Maschine nachlaufende Bedienungsperson (Nutzer) typischerweise durch manuelle Kraftausübung einen Fahrhebel eines Fahraktuators. Die Bewegung des Fahrhebels wird (beispielsweise über einen Bowdenzug) an die Steuerorgane übertragen, bewirkt deren synchrone Betätigung und damit die synchrone Vergrößerung (oder Verkleinerung) des Fördervolumenstroms beider Hydraulikpumpen, was wiederrum ein synchrones Beschleunigen (oder Verzögern) beider Hydromotoren und der angetriebenen Räder bewirkt und damit in einer beschleunigten oder verzögerten Vorwärts- bzw. Rückwärtsfahrt resultiert.

Um eine derartige Arbeitsmaschine zu lenken, verdreht der Nutzer die Lenkvorrichtung typischerweise durch manuelle Kraftausübung gegenüber dem Chassis.

Diese Verdrehung der Lenkvorrichtung gegenüber dem Chassis wird typischerweise durch ein Gestänge oder ein Getriebe an die Steuerorgane der Hydraulikpumpen weitergeleitet, bewirkt deren ungleiche Betätigung und dabei eine ungleiche Veränderung der beiden Fördervolumenströme (bzw. der Förderrichtungen) der Hydraulikpumpen, was wiederrum ein ungleiches Beschleunigen bzw. Verzögern der angetriebenen Räder bewirkt und damit in einer Kurvenfahrt resultiert.

Die Steuerorgane werden dabei zum Lenken, Beschleunigen und Verzögern der Arbeitsmaschine oftmals durch manuelle Kraftausübung des Nutzers betätigt. In diesem Zusammenhang ist daher auch von manuellem Lenken, Beschleunigen, Verzögern bzw. allgemeiner von manuellem Steuern die Rede.

Um den Bedienkomfort der Arbeitsmaschine zu erhöhen gibt es Bestrebungen, den benötigten manuellen Kraftaufwand zum Steuern der Arbeitsmaschine zu reduzieren, indem die Steuerorgane der Hydraulikpumpe durch elektrische Schrittmotoren betätigt (bewegt) werden.

Solch ein automatisiertes Steuern (bzw. Lenken, Beschleunigen, Verzögern) der Arbeitsmaschine ist dabei auch Voraussetzung für deren ferngesteuerten bzw. autonomen Betrieb.

Eine große Herausforderung besteht dabei in der exakt gleichzeitigen (parallelen, synchronen) Betätigung (Bewegung) beider Steuerorgane durch die beiden Schrittmotoren beim Beschleunigen und Verzögern des Arbeitsgeräts. Selbst minimale Abweichungen der Ansteuerung der Steuerorgane resultieren in einem unerwünschten Schlingern der Arbeitsmaschine und verhindern den exakten Geradeauslauf.

Das Ausstatten der Steuerorgane mit elektrischen Schrittmotoren geht dabei typischerweise auch damit einher, dass ein manuelles Lenken nicht mehr möglich ist, was manche Nutzer als Nachteil empfinden.

Vor diesem Hintergrund liegt der vorliegenden Erfindung die Aufgabe zugrunde, eine Arbeitsmaschine bereitzustellen, die sich durch eine verbesserte Praxistauglichkeit auszeichnet, insbesondere im Hinblick auf den Geradeauslauf beim Beschleunigen bzw. Verzögern der Arbeitsmaschine und dem Ermöglichen von sowohl manuellem als auch automatisiertem Steuern.

Gelöst wird diese Aufgabe durch die erfindungsgemäßen Arbeitsmaschinen gemäß der Ansprüche 1 und 6. Vorteilhafte Ausführungsformen sind in den Unteransprüchen beschrieben.

Die erfindungsgemäße Mehrspurige selbstfahrende Arbeitsmaschine gemäß Anspruch 1, insbesondere in Form eines handgeführten Einachstraktors, umfasst
- ein Chassis (Basisstruktur),
- ein das Chassis abstützendes Fahrwerk mit zwei (antreibbaren) Rädern oder Gleisketten,
- einen hydrostatischen Fahrantrieb mit zwei den beiden (antreibbare) Rädern bzw. Gleisketten zugeordneten Hydromotoren (Radmotoren) und zwei diese speisende, insbesondere als Axialkolbenpumpen ausgeführte, Hydraulikpumpen, wobei die Hydraulikpumpen jeweils dazu geeignet sind, Hydraulikflüssigkeit zu einem der beiden Hydromotoren zu fördern und jeweils ein Steuerorgan (insbesondere in Form eines Steuerhebels oder einer Steuerschraube) aufweisen und durch Betätigen des Steuerorgans der Fördervolumenstrom (und die Förderrichtung) der jeweiligen Hydraulikpumpe steuerbar ist,
- eine Lenkvorrichtung, die drehbar gegenüber dem Chassis gelagert ist,
- einen gegenüber dem Chassis linear verschiebbar geführten Steuerschlitten,
- ein Lenkkoppelglied, welches die Lenkvorrichtung und den Steuerschlitten derart mechanisch miteinander koppelt (insbesondere indem das Lenkkoppelglied jeweils drehbar an der Lenkvorrichtung und dem Steuerschlitten befestigt ist), dass ein Verdrehen der Lenkvorrichtung in einem linearen Verschieben des Steuerschlittens resultiert,
- eine drehbar auf dem Steuerschlitten gelagerte Steuerwippe,
- einen Fahraktuator, durch den die Steuerwippe gegenüber dem Steuerschlitten verdrehbar ist,
- zwei Steuerkoppelglieder, die jeweils eines derSteuerorgane mit der Steuerwippe mechanisch koppeln, wobei
- ein Verdrehen der Steuerwippe mittels des Fahraktuators in einem gleichzeitigen Betätigen beider Steuerorgane resultiert, und
- ein lineares Verschieben des Steuerschlittens in einem gleichzeitigen Betätigen beider Steuerorgane resultiert.

Die Erfindung basiert auf der Erkenntnis, dass durch die synergetische Kombination der erfindungswesentlichen Merkmale eine Arbeitsmaschine realisiert werden kann, die sowohl manuell als auch automatisiert gesteuert (gelenkt) werden kann und sich dabei sowohl im manuellen als auch im automatisierten Betrieb durch einen exzellenten Geradeauslauf beim Beschleunigen und Verzögern auszeichnet.

Die durch Steuerschlitten, Steuerwippe und Steuerkoppelglieder realisierte Kinematik ermöglicht dabei, dass beim Beschleunigen und Verzögern beide Steuerorgane durch einen einzigen, gemeinsam Fahraktuator (und nicht durch zwei separate Fahraktuatoren) angesteuert werden. Die durch den Fahraktuator induzierte Drehung der Steuerwippe gegenüber dem Steuerschlitten wird dabei mechanisch mittels der Steuerwippe und der Steuerkoppelglieder exakt synchron (parallel) auf beide Steuerorgane übertragen, was eine exakt synchrone (parallele) Beschleunigung (bzw. Verzögerung) beider Räder bewirkt und ein Schlingern der Arbeitsmaschine verhindert.

Darüber hinaus ermöglicht die Kinematik wahlweise sowohl ein manuelles als auch ein automatisiertes Lenken der Maschine:
Das Lenkkoppelglied koppelt die Lenkvorrichtung mechanisch mit dem Steuerschlitten. Ein Verdrehen der Lenkvorrichtung resultiert dabei in einem linearen Verschieben des Steuerschlittens gegenüber dem Chassis.

Um manuell zu Lenken wird durch manuellen Kraftaufwand des Nutzers die Lenkvorrichtung gegenüber dem Chassis verdreht. Diese Drehung wird durch das Lenkkoppelglied an den linear beweglichen (aber nicht drehbaren) Steuerschlitten übertragen und bewirkt dessen (lineares) Verschieben. Da die Steuerwippe auf dem Steuerschlitten angeordnet (bzw. gelagert) ist, geht das (lineare) Verschieben des Steuerschlittens auch mit einer (linearen) Verschiebung der Steuerwippe gegenüber dem Chassis einher.

Die Steuerwippe ist über die Steuerkoppelglieder mit den beiden Steuerorganen mechanisch gekoppelt. Das lineare Verschieben der Steuerwippe gegenüber dem Chassis wird daher durch die Steuerkoppelglieder an die Steuerorgane übertragen und bewirkt die synchrone einander entgegengesetzte Betätigung der beiden Steuerorgane.

Die Steuerorgane und die Hydraulikpumpen sind dabei so verschaltet, dass diese synchrone einander entgegengesetzte Betätigung der Steuerorgane die Erhöhung des Fördervolumenstrom der einen Hydraulikpumpe und die Verringerung des Fördervolumens der anderen Hydraulikpumpe bewirkt, was wiederrum in dem Beschleunigen eines Rades und dem Verzögern des anderen Rades und damit in einer Kurvenfahrt der Arbeitsmaschine resultiert.

Beim automatisierten Lenken hingegen muss die Lenkvorrichtung nicht gegenüber dem Chassis verdreht werden, sondern verbleibt in einer neutralen Mittelstellung. Das Lenkkoppelglied, dass die Lenkvorrichtung mit dem Steuerschlitten mechanisch koppelt, kann hierzu als (linearer) Lenkaktuator ausgeführt sein, dessen Länge durch Betätigung (aktiv) verändert werden kann.

Während nun beim manuellen Lenkbetrieb das Lenkkoppelglied, also der Lenkaktuator, in seiner Länge nicht verändert wird und lediglich passiv die Bewegung der Lenkvorrichtung auf den Steuerschlitten überträgt, wird der lineare Lenkaktuator beim automatisierten Lenken betätigt und (aktiv) in seiner Länge verändert. Dies bewirkt ein lineares Verschieben des Steuerschlittens, obwohl die Lenkvorrichtung nicht gegenüber dem Chassis verdreht wird. (Um ein unbeabsichtigtes Verdrehen der Lenkvorrichtung gegenüber dem Chassis beim automatisierten Lenken zu verhindern, kann die Lenkvorrichtung mittels einer Arretiervorrichtung in einer Mittellage fixiert werden.)

Das lineare Verschieben des Steuerschlittens gegenüber dem Chassis bewirkt dabei - genauso wie weiter oben im Zusammenhang mit dem manuellen Lenken ausgeführt - ein lineares Verschieben der Steuerwippe (gegenüber dem Chassis) und mittels der Steuerkoppelglieder ein synchron einander entgegengesetztes Betätigen der Steuerorgane der beiden Hydraulikpumpen, was in dem Beschleunigen eines Rades und dem Verzögern des anderen Rades resultiert. Beim automatisierten Lenken werden beide Steuerorgane durch einen einzigen, gemeinsamen Aktuator, den linearen Lenkaktuator, betätig bzw. in Bewegung versetzt.

Die Kinematik aus Lenkkoppelglied, Steuerschlitten und Steuerwippe ermöglicht damit sowohl das manuelle als auch das automatisierte Lenken der Arbeitsmaschine.

Nachfolgend werden einige Begriffe und Aspekte der erfindungsgemäßen Arbeitsmaschine näher erläutert:
Unter einer mehrspurigen Arbeitsmaschine ist eine Arbeitsmaschine zu verstehen, deren Räder (bzw. Gleitketten, Raupenketten) bei Geradeausfahrt in mindestens zwei nebeneinander angeordneten Spuren angeordnet sind. Einachstraktoren sind typischerweise als zweispurige Arbeitsmaschinen ausgeführt, deren beide Räder (bzw. Gleisketten, Raupenketten) bei Geradeausfahrt in zwei nebeneinander angeordneten Spuren angeordnet sind.

Es kann vorgesehen sein, dass ein Einachstraktor ein drittes Rad (bzw. eine dritte Gleiskette) aufweist, welches in einer dritten Spur angeordnet ist, die mittig zwischen den Spuren der anderen Räder verläuft. Derartige "Stützräder" kommen insbesondere dann zum Einsatz, wenn der Einachstraktor ferngesteuert oder autonom betrieben werden soll und die horizontale Ausrichtung der Arbeitsmaschine nicht durch manuelle Kraftausübung eines der Maschine nachlaufenden Nutzers gewährleistet werden kann.

Unter einer selbstfahrenden Arbeitsmaschine ist eine Arbeitsmaschine zu verstehen, die eine Antriebseinheit aufweist, mittels derer die Arbeitsmaschine in Bewegung versetzt werden kann.

Unter dem Fördervolumenstrom einer Hydraulikpumpe ist der Volumenstrom an Hydraulikflüssigkeit zu verstehen, der von der Hydraulikpumpe gefördert wird.

Bei Hydraulikpumpen kann typischerweise nicht nur der Fördervolumenstrom (stufenlos) variiert werden, sondern auch die Förderrichtung der Hydraulikflüssigkeit, also die Richtung, in der die Hydraulikflüssigkeit durch die Hydraulikpumpe hindurch gefördert wird, umgekehrt werden.

Wird die Förderrichtung umgekehrt, wechseln Saug- und Druckseite der Hydraulikpumpe, wodurch sich die Drehrichtung des durch die Hydraulikpumpe versorgten Hydromotors ändert und bei einer erfindungsgemäßen Arbeitsmaschine einfach zwischen Vorwärts- und Rückwärtsfahrt umgeschaltet werden kann.

Der Fahraktuator kann dabei als ein linearer Aktuator ausgeführt sein, dessen Länge elektrisch, pneumatisch oder hydraulisch (elektrischer, pneumatischer oder hydraulischer Aktuator) oder durch manuelle Kraftausübung des Nutzers (z.B. mittels eines Bowdenzugs) verändert werden kann (manueller Aktuator).

Gemäß einer bevorzugten Ausführungsform der erfindungsgemäßen Arbeitsmaschine
- ist das Lenkkoppelglied als (linearer) Lenkaktuator ausgeführt, dessen Länge durch Betätigung des Lenkaktuators veränderbar ist, und
- resultiert ein Verändern der Länge des Lenkaktuators in einem linearen Verschieben des Steuerschlittens gegenüber dem Chassis.

Auf diese Weise kann wie weiter oben bereits erläutert wurde, zusätzlich zum manuellen Lenken auch das automatisierte Lenken realisiert werden.

Der Lenkaktuator kann dabei insbesondere als elektrischer, pneumatischer oder hydraulischer Aktuator ausgeführt sein und das Verändern der Länge des Lenkaktuators erfolgt dabei insbesondere in Reaktion auf ein entsprechendes (elektronisches) Steuersignal, das vom Lenkaktuator empfangen wird und von einem Steuergerät gesendet wurde, welches zuvor einen entsprechenden Lenkbefehl empfangen hat.

Das Lenkkoppelglied kann weiterhin (mindestens) eine Lenkkoppelstange umfassen, die einerseits drehbar an der Lenkvorrichtung und andererseits drehbar am Steuerschlitten befestigt ist.

Weiterhin kann in vorteilhafter Weise vorgesehen sein, dass
- die Steuerorgane als Steuerhebel ausgeführt sind,
- die Steuerkoppelglieder als Steuerkoppelstangen ausgeführt sind,
- die Steuerwippe um eine Wippachse drehbar auf dem Steuerschlitten gelagert ist,
- die Steuerkoppelstangen die Steuerhebel mit der Steuerwippe mechanisch koppeln,
   indem
- die Steuerkoppelstangen jeweils drehbar an einem der beiden Steuerhebel befestigt sind,
- die Steuerkoppelstangen jeweils drehbar um eine Steuerwippenanbindungsachse an der Steuerwippe befestigt sind, und
- die Steuerwippenanbindungsachsen von der Wippachse insbesondere gleichweit beabstandet sind.

Auf diese Weise lässt sich die Kinematik von Steuerschlitten, Steuerwippe und Steuerkoppelgliedern einfach und robust realisieren- insbesondere vor dem Hintergrund, dass Hydraulikpumpen oftmals werksseitig mit Steuerhebeln ausgestattet sind, um den Fördervolumenstrom (und die Förderrichtung) zu steuern.

Dadurch, dass die Steuerwippenanbindungsachsen gleichweit von der Wippachse beanstandet sind, lässt sich auf ganz besonders einfache Weise eine gleichmäßige, synchrone Betätigung beider Steuerorgane realisieren.

Alternativ kann vorgesehen sein, dass
- die Steuerorgane als Steuerzahnräder ausgeführt sind,
- die Steuerkoppelglieder als Steuerkoppelzahnstangen ausgeführt sind,
- die Steuerwippe um eine Wippachse drehbar auf dem Steuerschlitten gelagert ist,
- die Steuerkoppelzahnstangen die Steuerzahnräder mit der Steuerwippe mechanisch koppeln,
   indem
- die Steuerkoppelzahnstangen jeweils mit einem der beiden Steuerzahnräder kämmen,
- die Steuerkoppelzahnstangen jeweils drehbar um eine Steuerwippenanbindungsachse an der Steuerwippe befestigt sind, und
- die Steuerwippenanbindungsachsen von der Wippachse insbesondere gleichweit beabstandet sind.

Diese Variante bietet sich insbesondere dann an, wenn die Hydraulikpumpen werksseitig jeweils mit einem Steuerzahnrad als Steuerorgan ausgestattet sind.

Der Herstellungsprozess der Arbeitsmaschine kann in vorteilhafter Weise vereinfacht werden, wenn
- die Steuerwippenanbindungsachsen und die Wippachse parallel zueinander verlaufen,
   und optional
- die Lenkvorrichtung um eine Lenkachse drehbar auf dem Chassis gelagert ist und die Lenkachse parallel zu der Wippachse verläuft.

Die vorliegende Erfindung manifestiert sich auch in der Arbeitsmaschine nach Anspruch 6. Diese unterscheidet sich von der Arbeitsmaschine nach Anspruch 1 im Wesentlichen dadurch, wie der Steuerschlitten und die Steuerwippe angeordnet und mit der Lenkvorrichtung und den Steuerorganen mechanisch gekoppelt sind:
Bei der Arbeitsmaschine nach Anspruch 1 ist der Steuerschlitten linear verschiebbar auf dem Chassis gelagert und über das Lenkkoppelglied mit der Lenkvorrichtung mechanisch gekoppelt. Auf dem Steuerschlitten ist die Steuerwippe drehbar gelagert und über die Steuerkoppelglieder mit den Steuerorganen mechanisch gekoppelt.

Bei der Arbeitsmaschine nach Anspruch 6 hingegen ist die Steuerwippe drehbar auf dem Chassis gelagert und (über das Lenkkoppelglied) mit der Lenkvorrichtung mechanisch gekoppelt. Auf der Steuerwippe ist der Steuerschlitten linear verschiebbar gelagert und über die Steuerkoppelglieder mit den Steuerorganen verbunden.

Ein Verdrehen der Lenkvorrichtung gegenüber dem Chassis (oder ein Verändern der Länge des Lenkkoppelglieds) geht somit bei der Maschine gemäß Anspruch 6 mit einer Verdrehung der Steuerwippe gegenüber dem Chassis einher (und nicht mit einer linearen Verschiebung des Steuerschlittens wie bei der Maschine gemäß Anspruch 1).

Ein Betätigen des Fahraktuators bewirkt bei der Maschine gemäß Anspruch 6 ein lineares Verschieben des Steuerschlittens gegenüber der Steuerwippe (und nicht ein Verdrehen der Steuerwippe gegenüber dem Steuerschlitten wie bei der Maschine gemäß Anspruch 1).

Die erfindungsgemäße mehrspurige selbstfahrende Arbeitsmaschine gemäß Anspruch 6, insbesondere in Form eines handgeführten Einachstraktors, umfasst
- ein Chassis (Basisstruktur),
- ein das Chassis abstützendes Fahrwerk mit zwei (antreibbaren) Rädern oder Gleisketten,
- einen hydrostatischen Fahrantrieb mit zwei den beiden (antreibbaren) Rädern bzw. Gleisketten zugeordneten Hydromotoren (Radmotoren) und zwei diese speisende, insbesondere als Axialkolbenpumpen ausgeführte, Hydraulikpumpen, wobei die Hydraulikpumpen jeweils dazu geeignet sind, Hydraulikflüssigkeit zu einem der beiden Hydromotoren zu fördern und jeweils ein Steuerorgan (insbesondere in Form eines Steuerhebels oder einer Steuerschraube) aufweisen und durch Betätigen des Steuerorgans der Fördervolumenstrom (und die Förderrichtung) der jeweiligen Hydraulikpumpe steuerbar ist,
- eine Lenkvorrichtung, die drehbar gegenüber dem Chassis gelagert ist,
- eine gegenüber dem Chassis drehbar gelagerte Steuerwippe,
- ein Lenkkoppelglied, welches die Lenkvorrichtung und die Steuerwippe derart mechanisch miteinander koppelt (insbesondere indem das Lenkkoppelglied jeweils drehbar an der Lenkvorrichtung und der Steuerwippe befestigt ist), dass ein Verdrehen der Lenkvorrichtung in einem Verdrehen der Steuerwippe resultiert,
- ein auf der Steuerwippe linear verschiebbar geführter Steuerschlitten,
- einen Fahraktuator, durch den der Steuerschlitten gegenüber der Steuerwippe linear verschiebbar ist,
- zwei Steuerkoppelglieder, die jeweils eines der Steuerorgane mit dem Steuerschlitten mechanisch koppeln, wobei
- ein lineares Verschieben des Steuerschlittens mittels des Fahraktuators in einem gleichzeitigen Betätigen beider Steuerorgane resultiert, und
- ein Verdrehen der Steuerwippe in einem gleichzeitigen Betätigen beider Steuerorgane resultiert.

Bevorzugt kann dabei vorgesehen sein, dass
- das Lenkkoppelglied als (linearer) Lenkaktuator ausgeführt ist, dessen Länge durch Betätigung des Lenkaktuators veränderbar ist, und
- ein Verändern der Länge des Lenkaktuators in einem Verdrehen der Steuerwippe gegenüber dem Chassis resultiert.

Gemäß einer weiteren bevorzugten Ausführungsform der Arbeitsmaschine gemäß Anspruch 6 ist vorgesehen, dass
- die Steuerorgane als Steuerhebel ausgeführt sind,
- die Steuerkoppelglieder als Steuerkoppelstangen ausgeführt sind,
- die Steuerwippe um eine Wippachse drehbar auf dem Chassis gelagert ist,
- die Steuerkoppelstangen die Steuerhebel mit demSteuerschlitten mechanisch koppeln,
   indem
- die Steuerkoppelstangen jeweils drehbar an einem der beiden Steuerhebel befestigt sind,
- die Steuerkoppelstangen jeweils drehbar um eine Steuerschlittenanbindungsachse an dem Steuerschlitten befestigt sind, und
- die Steuerschlittenanbindungsachse von der Wippachse insbesondere gleichweit beabstandet sind.

Alternativ kann vorgesehen sein, dass
- die Steuerorgane als Steuerzahnräder ausgeführt sind,
- die Steuerkoppelglieder als Steuerkoppelzahnstangen ausgeführt sind,
- die Steuerwippe um eine Wippachse drehbar auf dem Chassis gelagert ist,
- die Steuerkoppelzahnstangen die Steuerzahnräder mit dem Steuerschlitten mechanisch koppeln,
   indem
- die Steuerkoppelzahnstangen jeweils mit einem der beiden Steuerzahnräder kämmen,
- die Steuerkoppelzahnstangen jeweils drehbar um eine Steuerschlittenanbindungsachse an dem Steuerschlitten befestigt sind, und
- die Steuerschlittenanbindungsachse von der Wippachse insbesondere gleichweit beabstandet sind.

Gemäß einer weiteren bevorzugten Ausführungsform der Arbeitsmaschine gemäß Anspruch 6
- verlaufen die Steuerschlittenanbindungsachsen und die Wippachse parallel zueinander,
   und optional
- ist die Lenkvorrichtung um eine Lenkachse drehbar auf dem Chassis gelagert und verläuft die Lenkachse parallel zu der Wippachse.

Nachfolgend werden zwei Ausführungsbeispiele der erfindungsgemäßen Arbeitsmaschine im Zusammenhang mit den Zeichnungen näher erläutert. Dabei zeigen
- Fig. 1A - 1D: jeweils ein erstes Ausführungsbeispiel einer erfindungsgemäßen Arbeitsmaschine gemäß Anspruch 1 im Stillstand (Fig. 1A), beim manuellen Lenken (Fig. 1B), beim automatisierten Lenken (Fig. 1C) und bei der Rückwärtsfahrt (Fig. 1D), und
- Fig. 2A - 2D: jeweils ein zweites Ausführungsbeispiel einer erfindungsgemäßen Arbeitsmaschine gemäß Anspruch 6 im Stillstand (Fig. 2A), beim manuellen Lenken (Fig. 2B), beim automatisierten Lenken (Fig. 2C) und bei der Vorwärtsfahrt (Fig. 2D).

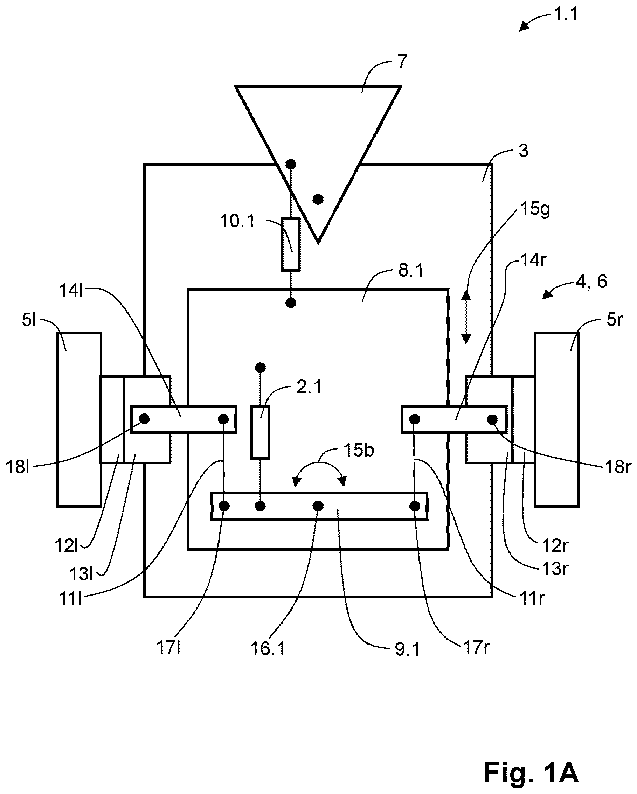

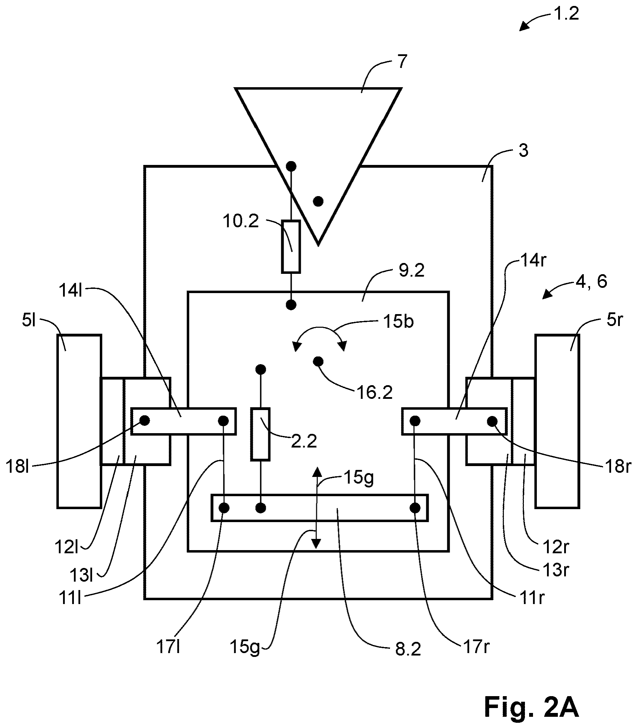

Die Figuren 1A bis 1D und 2A bis 2D zeigen jeweils eine grob schematische Darstellung eines Ausführungsbeispiels einer erfindungsgemäßen Arbeitsmaschine 1.1, 1.2 in verschiedenen Betriebssituationen. Das erste Ausführungsbeispiel 1.1 gemäß der Figuren 1A bis 1D entspricht dabei einer Arbeitsmaschine gemäß Anspruch 1, das zweite Ausführungsbeispiel 1.2 gemäß der Figuren 2A bis 2D entspricht einer Arbeitsmaschine gemäß Anspruch 6.

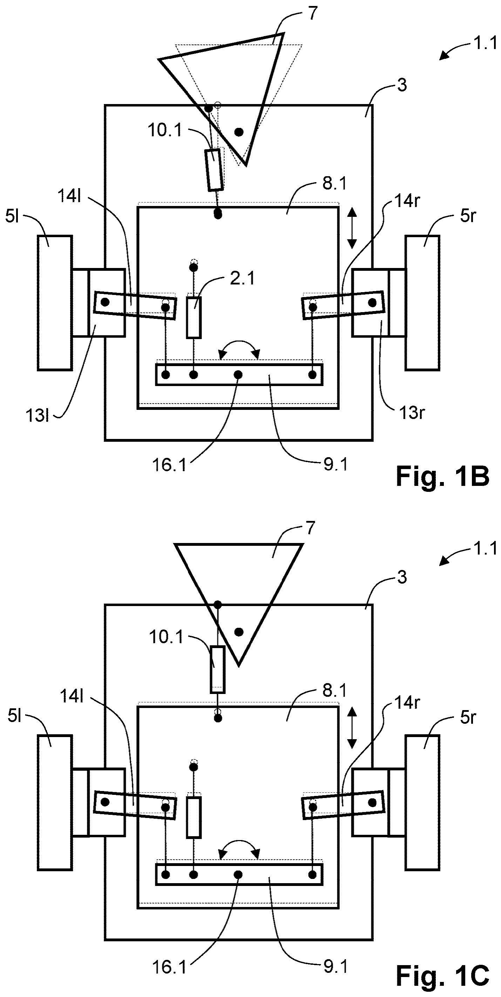

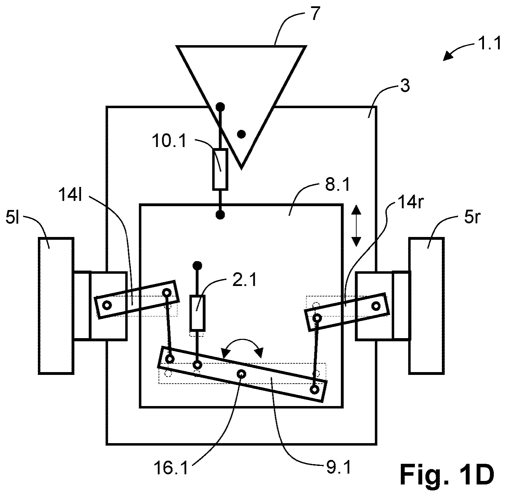

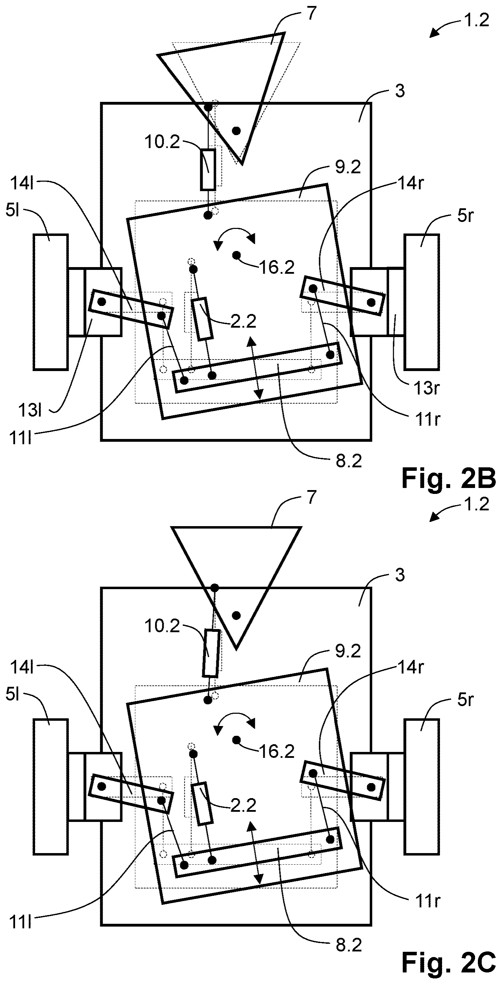

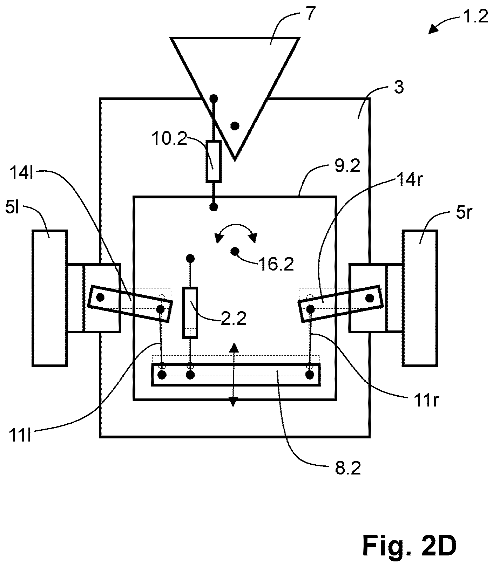

Die Figuren 1A und 2A zeigen die jeweilige Arbeitsmaschine 1.1, 1.2 im Stillstand, die Figuren 1B und 2B beim manuellen Lenken, die Figuren 1C und 2C beim automatisierten Lenken und die Figuren 1D und 2D bei der Rückwärtsfahrt bzw. bei der Vorwärtsfahrt.

Zunächst werden jene Komponenten der Arbeitsmaschine 1.1, 1.2 nähererläutert, die bei beiden dargestellten Ausführungsbeispielen übereinstimmend ausgeführt sind. Anschließend wird auf die ausführungsbeispielspezifischen Merkmale eingegangen.

Die Arbeitsmaschinen 1.1, 1.2 sind jeweils als ein zweispurige, selbstfahrende handgeführte Einachstraktoren ausgeführt und weisen jeweils ein Chassis 3, ein das Chassis 3 abstützendes Fahrwerk 4 mit zwei Rädern 5, einen hydrostatischen Fahrantrieb 6, eine Lenkvorrichtung 7, einen Steuerschlitten 8.1, 8.2, eine Steuerwippe 9.1, 9.2, ein Lenkkoppelglied 10.1, 10.2, einen Fahraktuator 2.1, 2.2 und zwei Steuerkoppelglieder 11l, 11r auf.

Der hydrostatische Fahrantrieb 6 umfasst jeweils zwei den beiden Rädern zugeordnete Hydromotoren 12l, 12r und zwei diese speisende, Hydraulikpumpen 13l, 13r.

Die Hydraulikpumpen 13l, 13r sind jeweils dazu geeignet, Hydraulikflüssigkeit zu einem der beiden Hydromotoren 12l, 12r der Arbeitsmaschine 1.1, 1.2 zu fördern und weisen jeweils ein Steuerorgan 14l, 14r in Form eines Steuerhebels auf, durch dessen Betätigung (Bewegung) der Fördervolumenstrom und die Förderrichtung der jeweiligen Hydraulikpumpe 13l, 13r steuerbar ist.

In Figur 1A bzw. 2A ist die Arbeitsmaschine 1.1, 1.2 jeweils im Stillstand in einer Art Ausgangskonfiguration dargestellt. Die Lenkvorrichtung 7, der Steuerschlitten 8.1, 8.2, die Steuerwippe 9.1, 9.2 und die Steuerhebel 14l, 14r befinden sich jeweils in einer Mittelstellung. In dieser Ausgangskonfiguration fördern die Hydraulikpumpen 13l, 13r keine Hydraulikflüssigkeit, der Fördervolumenstrom ist demnach (praktisch) Null.

Die in Figur 1A bzw. 2A dargestellte Ausgangskonfiguration der einzelnen Komponenten ist in den Figuren 1B, 1C und 1D bzw. 2B, 2C und 2D durch gestrichelte Linien angedeutet, um die Abweichungen von eben dieser Ausgangskonfiguration deutlich zu machen.

Die beiden Arbeitsmaschinen 1.1, 1.2 gemäß der Figuren 1A bis 1D einerseits und gemäß der Figuren 2A bis 2D andererseits unterscheidet im Wesentlichen dadurch, wie der Steuerschlitten 8.1, 8.2 und die Steuerwippe 9.1, 9.2 angeordnet und mit der Lenkvorrichtung 7 und den Steuerorganen 14l, 14r mechanisch gekoppelt sind.

Im Folgenden wird zunächst das in den Figuren 1A bis 1D dargestellte ersten Ausführungsbeispiel 1.1 näher beleuchtet:
Bei der Arbeitsmaschine 1.1 gemäß den Figuren 1A bis 1D und Anspruch 1 ist der Steuerschlitten 8.1 linear verschiebbar auf dem Chassis 3 gelagert und über das Lenkkoppelglied 10.1 mit der Lenkvorrichtung 7 mechanisch gekoppelt.

Die lineare Verschiebbarkeit wird durch den geradlinigen Doppelpfeil 15g illustriert.

Das Lenkkoppelglied 10.1 ist als linearer elektrischer Lenkaktuator ausgeführt, dessen Länge durch Betätigung mittels eines entsprechenden Steuersignals verändert (also vergrößert und verkleinert) werden kann. Das Lenkkoppelglied 10.1 ist dabei drehbar an der Lenkvorrichtung 7 und dem Steuerschlitten 8.1 befestigt.

Beim in Figur 1B dargestellten manuellen Lenken wird die Lenkvorrichtung 7 durch manuelle Kraftausübung des Nutzers gegenüber dem Chassis 3 gegen den Uhrzeigersinn verdreht. Diese Verdrehung wird über das Lenkkoppelglied 10.1, dessen Länge gegenüber der Ausgangskonfiguration gemäß Figur 1A unverändert ist, an den Steuerschlitten 8.1 weitergeleitet und bewirkt eine lineare Verschiebung des Steuerschlittens 8.1 weg von der Lenkvorrichtung 7.

Dasselbe Ergebnis, also die lineare Verschiebung des Steuerschlittens 8.1, wird auch beim in Figur 1C dargestellten automatisierten Lenken erzielt. Hier verbleibt die Lenkvorrichtung 7 jedoch unverändert in der Mittelstellung gemäß Figur 1A, allerdings wird das als linearer elektrischer Lenkaktuator ausgeführte Lenkkoppelglied 10.1 (ausgelöst durch ein Steuersignal eines Steuergeräts) betätigt und in seiner Länge vergrößert, was die lineare Verschiebung des Steuerschlittens 8.1 weg von der Lenkvorrichtung 7 bewirkt.

Auf dem Steuerschlitten 8.1 ist die Steuerwippe 9.1 um eine Wippachse 16.1 drehbar gelagert und über die als Steuerkoppelstangen ausgeführte Steuerkoppelglieder 11l, 11r mit den Steuerorganen 14l, 14r mechanisch gekoppelt. Die Steuerkoppelstangen 11l, 11r sind dabei jeweils drehbar um eine Steuerwippenanbindungsachse 17l, 17r an der Steuerwippe 9.1 befestigt, wobei die Steuerwippenanbindungsachsen 17l, 17r gleichweit von der Wippachse 16.1 beabstandet sind.

Das lineare Verschieben des Steuerschlittens 8.1 gegenüber dem Chassis 3 bewirkt damit - beim manuellen Lenken gemäß Figur 1A genauso wie beim automatisierten Lenken gemäß Figur 1B - auch ein lineares Verschieben der Steuerwippe 9.1 gegenüber dem Chassis 3, wobei sich die Steuerwippe 9.1 relativ zum Steuerschlitten 8.1 nicht bewegt. Diese lineare Verschiebung der Steuerwippe 9.1 bewirkt mittels der Steuerkoppelglieder 11l, 11r ein synchron gegenläufiges Betätigen der Steuerorgane 14l, 14r der beiden Hydraulikpumpen 13l, 13r, was in dem Beschleunigen eines Rades 5l und dem Verzögern des anderen Rades 5r resultiert.

Der linke Steuerhebel (Steuerorgan) 14l, der in den Figuren 1B und 1C links dargestellten Hydraulikpumpe 13l (linke Hydraulikpumpe 13l), wird dabei im Uhrzeigersinn um eine linke Steuerhebeldrehachse 18l gedreht, der rechte Steuerhebel 14r, der in den Figuren 1B und 1C rechts dargestellten Hydraulikpumpe 13r (rechte Hydraulikpumpe 13r), wird gegen den Uhrzeigersinn um eine rechte Steuerhebeldrehachse 18r gedreht.

Die Hydraulikpumpen 13l, 13r, die Hydromotoren 12l, 12r und insbesondere die Verschaltung der Leitungen zwischen den Hydraulikpumpen 13l, 13r und den Hydraulikmotoren 12l, 12r sind dabei derart eingerichtet bzw. verschaltet, dass durch die gegensinnige Betätigung der Steuerhebel 14l, 14r das der linken Hydraulikpumpe 13l zugeordnete linke Rad 5l beschleunigt und das der rechten Hydraulikpumpe 13l zugeordnete rechte Rad 5r verzögert wird.

In Figur 1D wird die Arbeitsmaschine 1.1 bei der geradlinigen Rückwärtsfahrt dargestellt. Der als elektrischer linearer Aktuator ausgeführte Fahraktuator 2.1 wird durch ein entsprechendes Steuersignal eines Steuergeräts betätigt und in seiner Länge verkleinert, was ein Verdrehen der Steuerwippe 9.1 im Uhrzeigersinn um die Wippachse 16.1 bewirkt. Dieses Verdrehen der Steuerwippe 9.1 relativ zum Steuerschlitten 8.1 bewirkt über die Steuerkoppelstangen (Steuerkoppelglieder 11l, 11r) ein exakt parallel zueinander erfolgendes Betätigen bzw. gleichsinniges Verdrehen der beiden Steuerhebel (Steuerorgane 14l, 14r): beide Steuerhebel werden entgegen dem Uhrzeigersinn um die jeweilige Steuerhebeldrehachse 18l, 18r gedreht, was ein rückwärtsgewandtes, drehsinngleiches (gleichsinniges), exakt gleichschnelles Beschleunigen bzw. Rotieren beider Räder 5l, 5r bewirkt. Die Arbeitsmaschine 1.1 setzt sich somit in Rückwärtsfahrt in Bewegung.

Wäre der Fahraktuator 2.1 hingegen durch eine entsprechende Betätigung in seiner Länge vergrößert worden, hätte dies eine Verdrehung der Steuerwippe 9.1 und der Steuerhebel (Steuerkoppelglieder 11l, 11r) entgegen des Uhrzeigersinnes bewirkt, was in einem vorwärtsgewandten, drehsinngleichen, exakt gleichschnellen Beschleunigen bzw. Rotieren beider Räder 5l, 5r resultiert wäre und die Arbeitsmaschine 1.1 in Vorwärtsfahrt versetzt hätte.

Im Folgenden wird das in den Figuren 2A bis 2D dargestellte zweite Ausführungsbeispiel näher beleuchtet:
Bei der Arbeitsmaschine 1.2 gemäß den Figuren 2A bis 2D und Anspruch 6 ist die Steuerwippe 9.2 drehbar um eine Wippachse 16.2 auf dem Chassis 3 gelagert und über das Lenkkoppelglied 10.2 mit der Lenkvorrichtung 7 mechanisch gekoppelt.

Die Drehbarkeit wird durch den bogenförmigen Doppelpfeil 15b illustriert.

Das Lenkkoppelglied 10.2 ist auch hier als linearer elektrischer Lenkaktuator ausgeführt, dessen Länge durch Betätigung mittels eines entsprechenden Steuersignals verändert (also vergrößert und verkleinert) werden kann. Das Lenkkoppelglied 10.2 ist dabei drehbar an der Lenkvorrichtung 7 und an der Steuerwippe 9.2 befestigt.

Beim in Figur 2B dargestellten manuellen Lenken wird die Lenkvorrichtung 7 durch manuelle Kraftausübung des Nutzers gegenüber dem Chassis 3 gegen den Uhrzeigersinn verdreht. Diese Verdrehung wird über das Lenkkoppelglied 10.2, dessen Länge gegenüber der Ausgangskonfiguration gemäß Figur 2A unverändert ist, an die Steuerwippe 9.2 weitergeleitet und bewirkt eine Verdrehung der Steuerwippe 9.2 im Uhrzeigersinn um die Wippachse 16.2.

Dasselbe Ergebnis, also die Verdrehung der Steuerwippe 9.2 im Uhrzeigersinn um die Wippachse 16.2, wird auch beim in Figur 2C dargestellten automatisierten Lenken erzielt. Hier verbleibt die Lenkvorrichtung 7 jedoch unverändert in der Mittelstellung gemäß Figur 2A, allerdings wird das als linearer elektrischer Lenkaktuator ausgeführte Lenkkoppelglied 10.2 (ausgelöst durch ein Steuersignal eines Steuergeräts) betätigt und in seiner Länge vergrößert, was die Verdrehung der Steuerwippe 9.2 im Uhrzeigersinn bewirkt.

Auf der Steuerwippe 9.2 ist der Steuerschlitten 8.2 linear beweglich gelagert (geführt) und über die als Steuerkoppelstangen ausgeführte Steuerkoppelglieder 11l, 11r mit den Steuerorganen 14l, 14r mechanisch gekoppelt. Die Steuerkoppelstangen sind dabei jeweils drehbar um eine Steuerwippenanbindungsachse 17l, 17r an dem Steuerschlitten 8.2 befestigt, wobei die Steuerwippenanbindungsachsen 17.1, 17.2 gleichweit von der Wippachse 16.2 beanstandet sind.

Sowohl der linke Steuerhebel (linkes Steuerorgan 14l), der in den Figuren 2B und 2C links dargestellten Hydraulikpumpe 13l (linke Hydraulikpumpe 13l), als auch der rechte Steuerhebel (rechtes Steuerorgan 14r), der in den Figuren 1B und 1C rechts dargestellten Hydraulikpumpe 13r (rechte Hydraulikpumpe 13r), werden jeweils im Uhrzeigersinn um eine Steuerhebeldrehachse 18l, 18r gedreht.

Die Hydraulikpumpen 13l, 13r, die Hydromotoren 12l, 12r und insbesondere die Verschaltung der Leitungen zwischen den Hydraulikpumpen und den Hydraulikmotoren sind dabei derart eingerichtet bzw. verschaltet, dass durch die Betätigung der Steuerorgane 14l, 14r im Uhrzeigersinn das der linken Hydraulikpumpe 13l zugeordnete linke Rad 5l beschleunigt und das der rechten Hydraulikpumpe 13r zugeordnete rechte Rad 5r verzögert wird.

In Figur 2D ist die Arbeitsmaschine 1.2 bei der Geradeausfahrt nach vorne (geradlinige Vorwärtsfahrt) dargestellt. Der als elektrischer linearer Aktuator ausgeführte Fahraktuator 2.2 wird durch ein entsprechendes Steuersignal eines Steuergeräts betätigt und in seiner Länge vergrößert, was ein lineares Verschieben des Steuerschlittens 8.2 weg von der Wippachse 16.2 (bzw. der Lenkvorrichtung 7) bewirkt. Dieses Verschieben des Steuerschlittens 8.2 relativ zur Steuerwippe 9.2 bewirkt über die Steuerkoppelstangen (Steuerkoppelglieder 11l, 11r) ein exakt gegensinnig zueinander erfolgendes Betätigen bzw. gegensinniges Verdrehen der beiden Steuerhebel: Der linke Steuerhebel 14l wird im Uhrzeigersinn um die linke Steuerhebeldrehachse 18l gedreht, der rechte Steuerhebel 14r wird entgegen des Uhrzeigersinns um die rechte Steuerhebelachse 18r gedreht. Das bewirkt ein vorwärtsgewandtes, drehsinngleiches, exakt gleichschnelles Beschleunigen bzw. Rotieren beider Räder 5l, 5r. Die Arbeitsmaschine 1.2 fährt somit geradeaus nach vorne.

Wäre der Fahraktuator 2.2 hingegen durch eine entsprechende Betätigung in seiner Länge verkleinert worden, hätte dies eine entgegengesetzte Verschiebung des Steuerschlittens 8.2 und entgegengesetzte Verdrehungen der Steuerhebel 14l, 14r bewirkt, was in einem rückwärtsgewandten, drehsinngleichen exakt gleichschnellem Beschleunigen bzw. Rotieren beider Räder 5l, 5r resultiert wäre und die Arbeitsmaschine 1.2 in Rückwärtsfahrt versetzt hätte.

### Bezugszeichen

| | |
|---|---|
| Arbeitsmaschine | 1.1, 1.2 |
| Fahraktuator | 2.1, 2.2 |
| Chassis | 3 |
| Fahrwerk | 4 |
| Räder | 5l, 5r |
| Fahrantrieb | 6 |
| Lenkvorrichtung | 7 |
| Steuerschlitten | 8.1, 8.2 |
| Steuerwippe | 9.1, 9.2 |
| Lenkkoppelglied | 10.1, 10.2 |
| Steuerkoppelglieder | 11l, 11r |
| Hydromotoren | 12l, 12r |
| Hydraulikpumpen | 13l, 13r |
| Steuerorgan | 14l, 14r |
| geradliniger Doppelpfeil | 15g |
| bogenförmiger Doppelpfeil | 15b |
| Wippachse | 16.1, 16.2 |
| Steuerwippenanbindungsachse | 17l, 17r |
| Steuerhebeldrehachse | 18l, 18r |

## Patentansprüche

1. Mehrspurige selbstfahrende Arbeitsmaschine (1.1), insbesondere in Form eines handgeführten Einachstraktors, umfassend
- ein Chassis (3),
- ein das Chassis (3) abstützendes Fahrwerk (4) mit zwei Rädern (5l, 5r) oder Gleisketten,
- einen hydrostatischen Fahrantrieb (6) mit zwei den beiden Rädern (5l, 5r) bzw. Gleisketten zugeordneten Hydromotoren (12l, 12r) und zwei diese speisende, insbesondere als Axialkolbenpumpen ausgeführte, Hydraulikpumpen (13l, 13r), wobei die Hydraulikpumpen (13l, 13r) jeweils dazu geeignet sind, Hydraulikflüssigkeit zu einem der beiden Hydromotoren (12l, 12r) zu fördern und jeweils ein Steuerorgan (14l, 14r) aufweisen und durch Betätigen des Steuerorgans (14l, 14r) der Fördervolumenstrom der jeweiligen Hydraulikpumpe (13l, 13r) steuerbar ist,
- eine Lenkvorrichtung (7), die drehbar gegenüber dem Chassis (3) gelagert ist,
- einen gegenüber dem Chassis (3) linear verschiebbar geführten Steuerschlitten (8.1),
- ein Lenkkoppelglied (10.1), welches die Lenkvorrichtung (7) und den Steuerschlitten (8.1) derart mechanisch miteinander koppelt, dass ein Verdrehen der Lenkvorrichtung (7) in einem linearen Verschieben des Steuerschlittens (8.1) resultiert,
- eine drehbar auf dem Steuerschlitten (8.1) gelagerte Steuerwippe (9.1),
- einen Fahraktuator (2.1), durch den die Steuerwippe (9.1) gegenüber dem Steuerschlitten (8.1) verdrehbar ist,
- zwei Steuerkoppelglieder (11l, 11r), die jeweils eines der Steuerorgane (14l, 14r) mit der Steuerwippe (9.1) mechanisch koppeln,
wobei
- ein Verdrehen der Steuerwippe (9.1) mittels des Fahraktuators (2.1) in einem gleichzeitigen Betätigen beider Steuerorgane (14l, 14r) resultiert, und
- ein lineares Verschieben des Steuerschlittens (8.1) in einem gleichzeitigen Betätigen beider Steuerorgane (14l, 14r) resultiert.

2. Mehrspurige selbstfahrende Arbeitsmaschine (1.1) nach Anspruch 1, wobei
- das Lenkkoppelglied (10.1) als Lenkaktuator ausgeführt ist, dessen Länge durch Betätigung des Lenkaktuators veränderbar ist, und
- ein Verändern der Länge des Lenkaktuators in einem linearen Verschieben des Steuerschlittens (8.1) gegenüber dem Chassis (3) resultiert.

3. Mehrspurige selbstfahrende Arbeitsmaschine (1.1) nach einem der voranstehenden Ansprüche, wobei
- die Steuerorgane (14l, 14r) als Steuerhebel ausgeführt sind,
- die Steuerkoppelglieder (11l, 11r) als Steuerkoppelstangen ausgeführt sind,
- die Steuerwippe (9.1) um eine Wippachse (16.1) drehbar auf dem Steuerschlitten (8.1) gelagert ist,
- die Steuerkoppelstangen die Steuerhebel mit der Steuerwippe (9.1) mechanisch koppeln,
indem
- die Steuerkoppelstangen jeweils drehbar an einem der beiden Steuerhebel befestigt sind,
- die Steuerkoppelstangen jeweils drehbar um eine Steuerwippenanbindungsachse (17l, 17r) an der Steuerwippe (9.1) befestigt sind, und
- die Steuerwippenanbindungsachsen (17l, 17r) von der Wippachse (16.1) insbesondere gleichweit beabstandet sind.

4. Mehrspurige selbstfahrende Arbeitsmaschine (1.1) nach Anspruch 1 oder 2, wobei
- die Steuerorgane (14l, 14r) als Steuerzahnräder ausgeführt sind,
- die Steuerkoppelglieder (11l, 11r) als Steuerkoppelzahnstangen ausgeführt sind,
- die Steuerwippe (9.1) um eine Wippachse (16.1) drehbar auf dem Steuerschlitten (8.1) gelagert ist,
- die Steuerkoppelzahnstangen die Steuerzahnräder mit der Steuerwippe (9.1) mechanisch koppeln,
indem
- die Steuerkoppelzahnstangen jeweils mit einem der beiden Steuerzahnräder kämmen,
- die Steuerkoppelzahnstangen jeweils drehbar um eine Steuerwippenanbindungsachse (17l, 17r) an der Steuerwippe (9.1) befestigt sind, und
- die Steuerwippenanbindungsachsen (17l, 17r) von der Wippachse (16.1) insbesondere gleichweit beabstandet sind.

5. Mehrspurige selbstfahrende Arbeitsmaschine (1.1) nach Anspruch 3 oder 4, wobei
- die Steuerwippenanbindungsachsen (17l, 17r) und die Wippachse (16.1) parallel zueinander verlaufen,
und optional
- die Lenkvorrichtung (7) um eine Lenkachse drehbar auf dem Chassis (3) gelagert ist und die Lenkachse parallel zu der Wippachse (16.1) verläuft.

6. Mehrspurige selbstfahrende Arbeitsmaschine (1.2), insbesondere in Form eines handgeführten Einachstraktors, umfassend
- ein Chassis (3),
- ein das Chassis (3) abstützendes Fahrwerk (4) mit zwei angetriebenen Rädern (5l, 5r) oder Gleisketten,
- einen hydrostatischen Fahrantrieb (6) mit zwei den beiden Rädern (5l, 5r) bzw. Gleisketten zugeordneten Hydromotoren (12l, 12r) und zwei diese speisende, insbesondere als Axialkolbenpumpen ausgeführte, Hydraulikpumpen (13l, 13r), wobei die Hydraulikpumpen (13l, 13r) jeweils dazu geeignet sind, Hydraulikflüssigkeit zu einem der beiden Hydromotoren (12l, 12r) zu fördern und jeweils ein Steuerorgan (14l, 14r) aufweisen und durch Betätigen des Steuerorgans (14l, 14r) der Fördervolumenstrom der jeweiligen Hydraulikpumpe (13l, 13r) steuerbar ist,
- eine Lenkvorrichtung (7), die drehbar gegenüber dem Chassis (3) gelagert ist,
- eine gegenüber dem Chassis (3) drehbar gelagerte Steuerwippe (9.2),
- ein Lenkkoppelglied (10.2), welches die Lenkvorrichtung (7) und die Steuerwippe (9.2) derart mechanisch miteinander koppelt, dass ein Verdrehen der Lenkvorrichtung (7) in einem Verdrehen der Steuerwippe (9.2) resultiert,
- ein auf der Steuerwippe (9.2) linear verschiebbar geführter Steuerschlitten (8.2),
- einen Fahraktuator (2.2), durch den der Steuerschlitten (8.2) gegenüber der Steuerwippe (9.2) linear verschiebbar ist,
- zwei Steuerkoppelglieder (11l, 11r), die jeweils eines der Steuerorgane (14l, 14r) mit dem Steuerschlitten (8.2) mechanisch koppeln, wobei
- ein lineares Verschieben des Steuerschlittens (8.2) mittels des Fahraktuators (2.2) in einem gleichzeitigen Betätigen beider Steuerorgane (14l, 14r) resultiert, und
- ein Verdrehen der Steuerwippe (9.2) in einem gleichzeitigen Betätigen beider Steuerorgane (14l, 14r) resultiert.

7. Mehrspurige selbstfahrende Arbeitsmaschine (1.2) nach Anspruch 6, wobei
- das Lenkkoppelglied (10.2) als Lenkaktuator ausgeführt ist, dessen Länge durch Betätigung des Lenkaktuators veränderbar ist, und
- ein Verändern der Länge des Lenkaktuators in einem Verdrehen der Steuerwippe (9.2) gegenüber dem Chassis (3) resultiert.

8. Mehrspurige selbstfahrende Arbeitsmaschine (1.2) nach Anspruch 6 oder 7, wobei
- die Steuerorgane (14l, 14r) als Steuerhebel ausgeführt sind,
- die Steuerkoppelglieder (11l, 11r) als Steuerkoppelstangen ausgeführt sind,
- die Steuerwippe (9.2) um eine Wippachse (16.2) drehbar auf dem Chassis (3) gelagert ist,
- die Steuerkoppelstangen die Steuerhebel mit dem Steuerschlitten (8.2) mechanisch koppeln,
indem
- die Steuerkoppelstangen jeweils drehbar an einem der beiden Steuerhebel befestigt sind,
- die Steuerkoppelstangen jeweils drehbar um eine Steuerschlittenanbindungsachse (17l, 17r) an dem Steuerschlitten befestigt sind, und
- die Steuerschlittenanbindungsachse (17l, 17r) von der Wippachse (16.2) insbesondere gleichweit beabstandet sind.

9. Mehrspurige selbstfahrende Arbeitsmaschine nach Anspruch 6 oder 7, wobei
- die Steuerorgane (14l, 14r) als Steuerzahnräder ausgeführt sind,
- die Steuerkoppelglieder (11l, 11r) als Steuerkoppelzahnstangen ausgeführt sind,
- die Steuerwippe (9.2) um eine Wippachse (16.2) drehbar auf dem Chassis (3) gelagert ist,
- die Steuerkoppelzahnstangen die Steuerzahnräder mit dem Steuerschlitten (8.2) mechanisch koppeln, indem
- die Steuerkoppelzahnstangen jeweils mit einem der beiden Steuerzahnräder kämmen,
- die Steuerkoppelzahnstangen jeweils drehbar um eine Steuerschlittenanbindungsachse (17l, 17r) an dem Steuerschlitten (8.2) befestigt sind, und
- die Steuerschlittenanbindungsachse (17l, 17r) von der Wippachse (16.2) insbesondere gleichweit beabstandet sind.

10. Mehrspurige selbstfahrende Arbeitsmaschine (1.2) nach Anspruch 8 oder 9, wobei
- die Steuerschlittenanbindungsachsen (17l, 17r) und die Wippachse (16.2) parallel zueinander verlaufen, und optional
- die Lenkvorrichtung (7) um eine Lenkachse drehbar auf dem Chassis (3) gelagert ist und die Lenkachse parallel zu der Wippachse (16.2) verläuft.
